# EUROPÄISCHE PATENTSCHRIFT

(11) **EP 0 692 441 B1**
(45) Veröffentlichungstag und Bekanntmachung des Hinweises auf die Patenterteilung: **30.09.1998**
(21) Anmeldenummer: 95110968.5
(22) Anmeldetag: 13.07.1995
(51) Int. Cl.: B65G 53/28, B65G 53/52

(54) **Verfahren und Vorrichtung zum pneumatischen Fördern von Schüttgut**
Method of and device for pneumatic conveyance of bulk material
Procédé et dispositf pour transport pneumatique de matériau en vrac

(30) Priorität: 15.07.1994 DE 4424897
(43) Veröffentlichungstag der Anmeldung: 17.01.1996
(73) Patentinhaber: MOTAN-FULLER Verfahrenstechnik GmbH, 88242 Weingarten (DE)
(72) Erfinder: Heep, Dieter (Ober-Ing.), D-88368 Bergatreute (DE)
(74) Vertreter: Riebling, Peter, Dr.-Ing.

(56) Entgegenhaltungen:
- EP-A- 0 605 245
- DD-A- 276 850
- DE-A- 4 109 960
- DE-A- 4 219 616
- DE-A- 4 243 327
- DE-B- 2 437 799
- DE-U- 1 936 470

## Beschreibung

Die Erfindung betrifft ein Verfahren und eine Vorrichtung zur pneumatischen Förderung von Schüttgütern nach dem Oberbegriff der Ansprüche 1 bzw. 4.

Vorrichtungen dieser Gattungen sind aus der DE-PS 23 05 050 und der DE-PS 25 50 164 bekannt. Die DE-PS 33 23 739, DE-OS 34 35 907 und die DE-PS 30 37 517 werden in der DE-PS 37 14 923 umfangreich gewürdigt.

Die DD-A-276 850 offenbart eine Kombination von Unter- und Überdruck zur pneumatischen Förderung von Schüttgütern. Genaue Angaben zu den verwendeten Druckverhältnissen und den Jeweils angesaugten bzw. eingeblasenen Luftmengen sind nicht enthalten.

In der DE 41 09 960 A1 und der DE 42 19 616 A1 werden Verfahren beschrieben, die den Atmosphärendruck an der Schüttgut-Aufgabestelle zum Schüttguttransport benutzen, indem am Ende der Förderrohrleitung mit Hilfe eines Vakuumerzeugers ein entsprechender unter dem Atmosphärendruck liegender Druckraum erzeugt wird. Um eine langsam fließende Dichtstromförderung zu erzielen, werden über entsprechende Begleiteinrichtungen Verstopfungen bekämpft. Dies ist ebenfalls Gegenstand der eigenen Anmeldung P 42 43 327.4, veröffentlicht als DE 42 43 327 A1.

Anlagen solcher Art werden dringend benötigt zur Entleerung von Schüttgut-Containerfahrzeugen, die nicht wie Kesselfahrzeuge ihren 10-20 Tonnen-Inhalt über Druckluft selbst entladen können, an Stellen, wo die Kellerräume zum Aufstellen der Schüttgutannahme-Aggregate fehlen und ein Fördern mit niedrigen Geschwindigkeiten für Granulate oder pulverförmige Produkte unabdingbar ist.

Außerdem würden bei der Konfiguration mehrere Abgabestellen auf einem Empfangsort die Anlagenkosten entscheidend gesenkt.

Da in bekannter Weise Förderungen mit niedriger Geschwindigkeit hohe Druckverluste zur Folge haben, werden im Vakuumbetrieb nur kurze Förderentfernungen realisiert. Deshalb schlägt die DE 42 19 616 A1 am Ende des Vakuumtransportes den Einsatz einer Druckförderanlage mit einem Druckgefäß vor. Eine Technik, die unter dem Begriff Saug-Druckanlage bekannt ist und als Neuerung die zusätzliche Installation von Bypassventilen im Saugförderteil aufzeigt.

Da für das sichere Betreiben einer solchen Anlage die Konstanthaltung der Luftmenge, und damit die Anfangs- und Endgeschwindigkeit bezogen auf den freien Rohrquerschnitt von entscheidender Bedeutung ist, benötigt man hochwertige Vakuumpumpen mit stabiler Kennlinie, wie z. B. Drehkolbengebläse, deren Drehzahl zur Erzeugung der Luftmenge entsprechend festgelegt werden muß. Auswählbare Luftmengen bedeuten über mechanische oder elektronische Drehzahlregelungen einen hohen Aufwand.

In der DE 42 19 616 A1 wird die Wirkung des Unterdruckerzeugers durch die Begrenzung der Luftmenge des Bypass-Systems erhalten, während die Restluftmenge der vom Unterdruckerzeuger geforderten Luftmenge in Abhängigkeit seiner Unterdruck-/Luftmengenkennlinie an der Aufgabestelle aus der Atmosphäre nachfließt. Der Betriebspunkt ist abhängig von einer gleichmäßigen Schüttgut-Massenstromgröße, die durch entsprechende Aufteilung von Ansaugluft und zusätzlicher Fluidisierluft gewährleistet wird.

Der vorliegenden Erfindung liegt die Aufgabe zugrunde, eine Anlage der eingangs genannten Art dahin zu verbessern und zu vereinfachen, daß auf den Einsatz hochwertiger Vakuumpumpen verzichtet werden kann, daß bei Verwendung preiswerterer Vakuumerzeuger mit flachen Kennlinien eine festgelegte Luftgeschwindigkeit garantiert wird, und daß bei Nichtausreichen des Atmosphärendrucks bei langen Leitungen oder hohen Durchsatzleistungen, bezogen auf den benutzten Rohrquerschnitt bzw. Störungen in den Förderungen, das übergangslose Betreiben der Anlage über den Atmosphärendruck gewährleistet wird und damit ein Zwischenbehälter für eine nachfolgende Druckanlage entfällt.

Die Lösung der gestellten Aufgabe erfolgt durch die technische Lehre der unabhängigen Ansprüche.

Wichtig ist hierbei, daß das Schüttgut im Dichtstrom mit definierter Geschwindigkeit durch Erzeugen eines Teilvakuums in der Rohrleitung diese teilbefüllt und nach Verschließen der Eintrittsöffnung durch Überdruck ganz oder teilweise entleert und daß durch dauerndes Wiederholen dieses Vorgangs ein quasi kontinuierlicher Massenstrom vom Aufgabeort zum Empfangsort gewährleistet wird, wobei bei Unterdruck eine größere Luftmenge abgesaugt wird als bei Überdruck eingespeist wird.

Die Eintrittsöffnung ist hierbei das Einlaufverschlußventil am Aufgabetrichter. Es entfällt somit die Notwendigkeit der Anordnung einer kostenaufwendigen Zellenradschleuse am Einspeisungsort des Fördergutes oder alternativ der Anordnung eines Druckgefäßes.

Stattdessen erlaubt die Erfindung, daß ein einfacher Aufgabetrichter verwendet wird, der mit einem zugeordneten Einlaufverschlußventil arbeitet.

Die Erfindung ist grundsätzlich für zwei verschiedene Förderbetriebsarten geeignet, wobei entweder granulatförmige Stoffe gefördert werden können mit einer gleichmäßigen Kornfraktion von z.B. 3 mm oder aber in einer anderen Betriebsweise der Anlage auch pulverförmige Stoffe, bei welchen die Kornfraktion von der Stufe fein bis grob reichen kann.

Da diese Produkte bei einer Langsamförderung zum Verstopfen der Förderleitung neigen, sind zusätzliche Maßnahmen vorgesehen, um ein derartiges Verstopfen zu vermeiden. Derartige Maßnahmen sind bekannt und sind beispielsweise in der auf den gleichen Anmelder zurückgehenden DE 42 43 327 A1 beschrieben. Die dortige Offenbarung soll vollinhaltlich von dem Offenbarungsgehalt der vorliegenden Erfindung umfaßt sein.

Wegen der Funktion dieser Overflow-Förderung wird auf die genannte Beschreibung verwiesen.

Die Erfindung ermöglicht also zwei verschiedene Förderbetriebsarten, nämlich den Betrieb in der Förderleitung mit Bypass-Hilfseinrichtungen, wie sie in der genannten eigenen Patentanmeldung beschrieben sind, und im übrigen den Betrieb ohne Bypass-Hilfseinrichtungen zur Förderung granulatförmiger Stoffe.

Dies erfolgt durch Anordnung eines Unterdruckerzeugers am Ende einer Druckförderanlage, deren Lufteinspeisung über Druckminderer und Lavaldüsen aus dem Preßluftnetz gesichert ist, und dessen Kennlinie bei maximalem Unterdruck mehr Luftmenge ausweist, als von den Lavaldüsen des Förder- und Bypass-Systems eingespeist werden kann.

Damit wird der Betriebspunkt der Druckförderanlage an der Aufgabestelle unter den Atmosphärendruck verschoben.

Im Prinzip arbeitet die Rohrleitung wie ein langgezogenes Druckgefäß, das durch Vakuumbetrieb und Langsamförderung gefüllt, durch Absperren der Aufgabestelle verschlossen, und intermittierend durch Förderung im Überdruckbetrieb wieder teilentleert wird.

Im bildichen Vergleich wirkt das System wie eine Kolbenpumpe, deren Gehäuse von der Förderrohrleitung gebildet wird, und die nach dem Absaugen des Schüttgutes in Ausgangsrichtung durch Überdruck entleert wird.

Begünstigt wird diese Lösung für pulverförmige Produkte durch die Verwendung federgestützter Überströmventile, die in bekannter Weise bei Bereitstellung der notwendigen Luftmenge gleichzeitig in der Rohrleitung aufgrund ihrer eingestellten Rampe das Schüttgut in Bewegung setzen und ohne ein Zusammenschieben des Schüttgutes durch pneumatischen Transport die Rohrleitung teilentleeren, somit Platz für den nächsten Ansaugvorgang zu schaffen.

Da beim Ansaugen, vergleichbar mit dem Füllen eines Druckgefäßes, ein Teil der Förderentfernung überwunden wird, arbeitet das System quasi kontinuierlich. Dabei kann je nach Produktanforderung der Druckbetrieb auch mit einer höheren Geschwindigkeit erfolgen.

Die vorliegende Erfindung ermoglicht also, daß man sozusagen im Kolbenbetrieb das Fördergut hinten schiebt und vorne zieht, um dieses so mit guter Förderleistung und ohne Gefahr der Verstopfung durch die Förderleitung zu bringen.

Anstatt der Anordnung eines Saugfördergerätes am saugseitigen Ende der Förderleitung ist es in einer Weiterbildung der vorliegenden Erfindung vorgesehen, daß das Saugfördergerät durch einen kostengünstigen Injektor ersetzt wird.

Dieser Injektor ist bevorzugt als Ringspalt-Injektor ausgebildet, durch welchen hindurch das Fördergut gefördert wird.

Bei der Verwendung eines Unterdruck-Saugfördergerätes kann ein kontinuierlicher Saugbetrieb aufrechterhalten werden, ebenso wie mit einem Ringspalt-Injektor.

Als weitere Möglichkeit ist jedoch vorgesehen, daß auf der Druckseite der Förderleitung der Saugfördervorgang der Förderleitung unterbrochen wird durch öffnen des Auslaufventiles des Saugfördergerätes, welches an der Saugseite der Förderleitung angeordnet ist. Dadurch steigt der Förderdruck entsprechend, weil der Arbeitspunkt weit höher in den Druckbereich verschoben wird.

Anstatt der Anordnung einer einfachen Förderleitung können auch mehrere parallel nebeneinander angeordnete Förderleitungen verwendet werden, wobei bevorzugt in der ersten Förderleitung angesaugt wird, während in der zweiten Förderleitung im gleichen Zeitpunkt gedrückt wird. Durch Wechsel der entsprechenden Druck- und Saughübe wird die entsprechende Förderleistung in den beiden Förderleitungen kontinuierlich sich ergänzend verwirklicht, so daß ein kontinuierlicher Förderstrom gegeben ist.

Vorteilhaft hierbei ist, daß nur ein einziger Unterdruckerzeuger verwendet werden braucht.

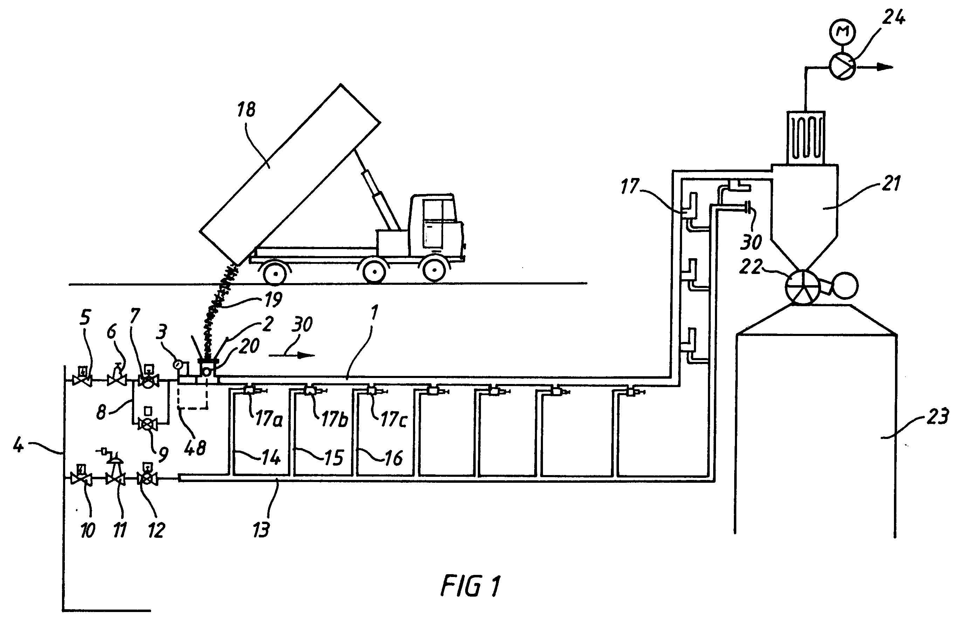

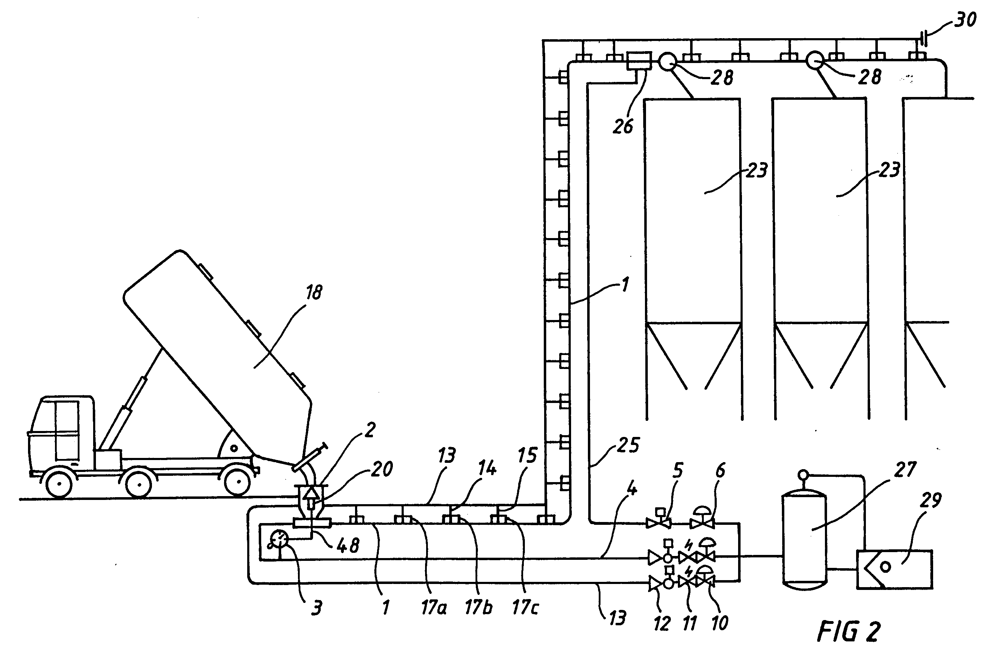

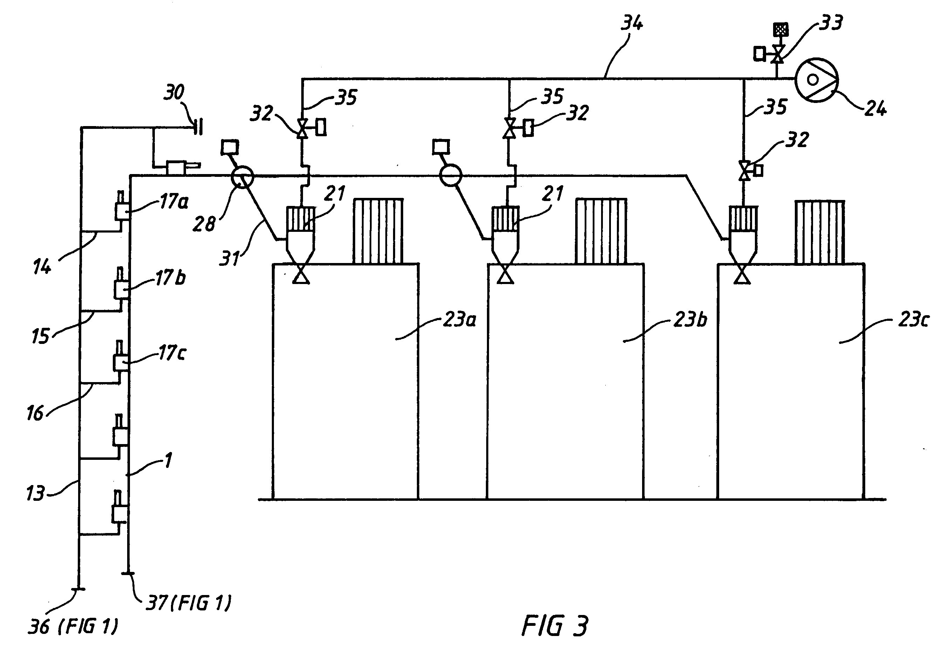

In Figur 1 ist dargestellt, daß aus einem Container 18, der beispielsweise an einem Fahrzeug angeordnet werden kann, ein Produktstrom 19 in einen einfachen Aufgabetrichter 2 geleitet wird, der mit einem Einlaufverschlußventil 20 verschließbar ist. Der Produktstrom 19 wird somit bei geöffnetem Einlaufverschlußventil 20 in die Förderleitung 1 eingespeist.

Am druckseitigen Ende der Förderleitung 1 sind hierbei die entsprechenden Druckerzeugungsorgane angeordnet, die im gezeigten Ausführungsbeispiel aus einer Druckluft-Netzleitung 4 bestehen, welche über ein Magnetventil 5, einen Druckminderer 6 und einen Lavalkugelhahn 7 den erforderlichen Druck auf der Druckseite der Förderleitung 1 erzeugt und gleichzeitig die Luftmenge regelt. Hierbei ist ein Kontaktmanometer 3 angeordnet, welches über eine Leitung 48 mit dem Einlaufverschlußventil 20 in Verbindung steht.

Bei Erreichen des maximalen Unterdruckes der Förderleitung 1 wird das Einlaufverschlußventil 20 geöffnet, wobei dieser Druck vom Kontaktmanometer 3 erfaßt wird.

Zum Freiblasen der Rohrleitung bei Förderende ist im übrigen eine Bypassleitung 8 vorgesehen, welche den Lavalkugelhahn 7 umgeht, in welcher Leitung 8 ein weiterer Lavalkugelhahn 9 angeordnet ist. Der Lavalkugelhahn 9 ist so kalibiert, daß über die Bypassleitung 8 mit einer erhöhten Luftmenge in die Förderleitung 1 eingeblasen wird, sofern diese nach Förderende geleert werden soll.

Zur Vermeidung der Pfropfenbildung bei Pulverförderung sind die in der älteren Anmeldung des gleichen Anmelders beschriebenen Overflow-Einrichtungen vorhanden. Diese Einrichtungen bestehen im wesentlichen aus einem von der Netzleitung 4 abzweigenden Bypassleitung 13, vor der ein Magnetventil 10, ein Druckminderer 11 und ein Lavalkugelhahn 12 angeordnet sind. Die im Bypass über die Bypassleitung 13 geförderte Luft wird über Abzweigleitungen 14,15,16 den verschiedenen Überströmventilen 17a,17b,17c zugeführt, so daß bedarfsweise ein zusätzlicher Luftstrom in die Förderleitung 1 bläst, um gegebenenfalls einen sich dort bildenden Pfropfen aufzulösen, wenn die rampenförmige Federkennlinie in dem jeweiligen Überströmventil 17a,17b,17c gemäß der vorgegebenen Einstellung aktiviert wird.

Wichtig ist, daß auf der Entnahmeseite der Förderleitung 1 gleichzeitig eine Saugförderung stattfindet, wobei ein Saugfördergerät 21 vorgesehen ist, welches im gezeigten Ausführungsbeispiel aus einem Unterdruckbehälter besteht, an dem ein Filter angeordnet ist, aus welchem über einen Vakuumerzeuger 24 Luft gefördert wird. Im übrigen ist die Bypassleitung 13 auf der Entnahmeseite mit einem Verschluß 30 verschlossen.

Das Saugfördergerät 21 ist an der Abgabeöffnung mit einer Zellenradschleuse 22 verschlossen, um das Ausschleusen des geförderten Schüttgutes in das darunter angeordnete Silo 23 kontinuierlich zu ermöglichen.

Es wird aber darauf hingewiesen, daß eine derartige Zellenradschleuse 22 auch entfallen kann; dies wird anhand der späteren Ausführungsbeispiele näher beschrieben.

In Figur 2 sind die gleichen Teile der Figur 1 mit den gleichen Bezugszeichen dargestellt.

Die Druckseite der Förderleitungen 1,13 ist im wesentlichen gleich ausgebildet wie es anhand der Figur 1 erläutert wurde.

Auf der Saugseite der Förderleitung ist jedoch ein Injektor 26 angeordnet, der das vorher erwähnte Saugfördergerät 21 ersetzt. Dieser Injektor 26 ist bevorzugt als Ringspalt-Injektor ausgebildet, durch welchen das Fördergut in der Förderleitung 1 ohne Druckverlust im Druckbetrieb gefördert wird.

Zur Versorgung des Injektors 26 ist eine weitere Netzleitung 25 vorgesehen, welche ebenfalls über ein Magnetventil 5 und einen Druckminderer 6 von einer gemeinsamen Druckversorgung versorgt wird, die im gezeigten Ausführungsbeispiel aus einem Windkessel 27 und einem daran angeschlossenen Aggregat 29 mit Druck versorgt wird.

Wichtig ist also, daß durch einen kostengünstigen Injektor 26, welcher ein relativ aufwendiges Saugfördergerät 21 ersetzt, die gleichen Vorteile erreicht werden.

Hinter dem Injektor ist jeweils in der Förderleitung 1 eine Rohrweiche 28 angeordnet, welche gesteuert das Fördergut in ein jeweils daran angeschlossenes Silo 23 einträgt. Es sind hierbei eine Reihe von Silos 23 parallel nebeneinander geschaltet.

In Figur 3 ist zunächst dargestellt, daß an den Anschlüssen 36,37 die gleichen Drucklufterzeuger sitzen, wie sie anhand der Figur 1 erläutert wurden. Es gelten somit für die Druckseite die gleichen Erläuterungen.

Die Figur 3 zeigt demgemäß nur die Saugseite der Förderleitung 1, wo dargestellt ist, daß auf der Saugseite jeweils eine Rohrweiche 28 angeordnet ist, die über eine Abzweigleitung 31 das Fördergut einem Saugfördergerät 21 zuträgt, welches seinerseits in jeweils einen Silo 23,23a,23b,23c mündet.

Wichtig ist, daß am Saugfördergerät 21 eine Saugleitung 34 ansetzt, welche über Abzweigleitung 35 in Reinluftventile 32 mündet, welche mit dem jeweiligen Filter des Saugfördergerätes 21 verbunden sind.

Die Saugleitung 34 ist an einen Vakuumerzeuger 24 angeschlossen, wobei die Leitung über ein Falschluftventil 33 entlüftet werden kann.

Durch diese Art der Förderung ergibt sich der Vorteil, daß bei Betätigung des Falschluftventils 33, während des Druckvorganges (Druckförderung in der Förderleitung) das Saugfördergerät 21 geöffnet werden kann.

Das heißt, man erspart sich eine Zellenradschleuse am jeweiligen Saugfördergerät 21. Das Fehlen des Unterdruckes bei geöffnetem Falschluftventil 33 führt zu einem Ansteigen des Förderdruckes unterhalb des Ventiles 20.

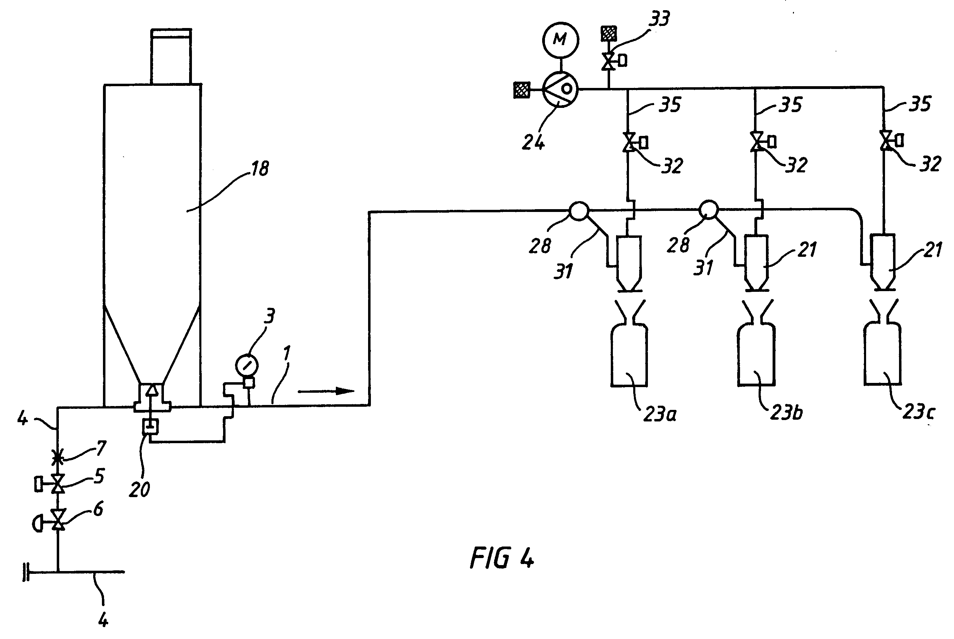

Die Figur 4 dient der schematisierten Darstellung einer Förderung eines granulatförmigen Förderstoffes, wobei auf die vorher beschriebene Bypassleitung 13 verzichtet werden kann. Auf der Druckseite sind somit Verhältnisse gegeben, wie sie anhand der Figur 1 beschrieben wurden, jedoch ohne Verwendung einer Bypassleitung 13.

Auf der Saugseite der Förderleitung 1 sind hingegen wieder Saugfördergeräte 21 angeordnet, welche das Fördergut in die zugeordneten Silos 23a,23b,23c fördern.

Ansonsten gelten für die Saugseite die gleichen Erläuterungen wie sie anhand der Figur 3 gegeben wurden.

Wichtig ist, daß die Saugfördergeräte 21 in den Figuren 3 und 4 auch durch den in Figur 2 beschriebenen Injektor 26 ersetzt werden können.

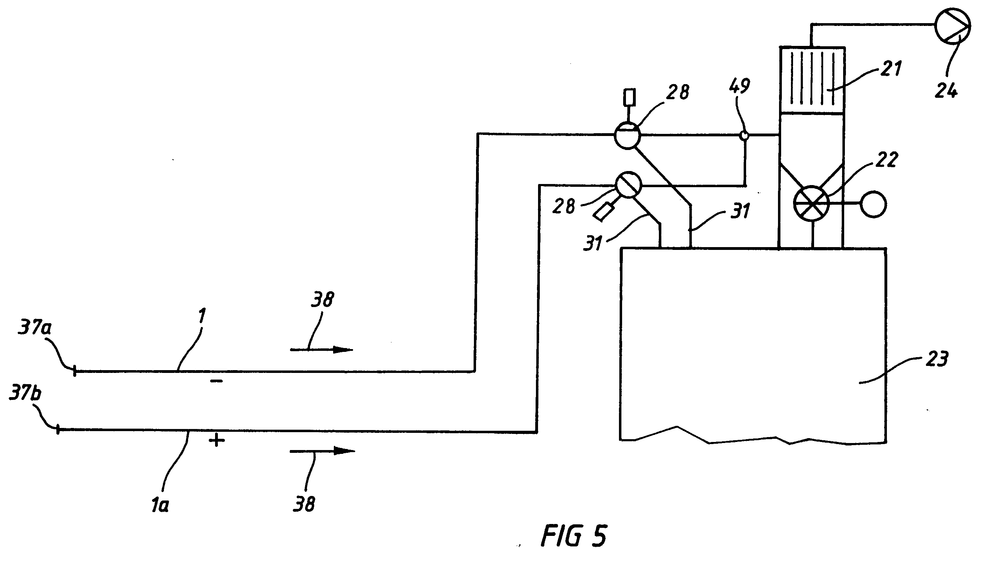

In Figur 5 ist ein Doppelkolbenprinzip dargestellt, bei welchem das Fördergut auf zwei Förderleitungen 1,1a aufgeteilt wird, wobei an den Anschlüssen 37a, 37b jeweils die Druckversorgung ansetzt, wie sie anhand der Figur 4 oder der Figur 1 erläutert wurde.

Im übrigen ist nicht dargestellt, daß jeweils an diesen Anschlüssen 37a,37b bereits schon das Fördergut eingespeist wurde.

Wichtig ist, daß ein Doppelkolbenprinzip verwirklicht wird, bei welchem der einen Förderleitung 1 ein Unterdruck und in der anderen Förderleitung 1a ein Überdruck und umgekehrt stattfindet, wobei die beiden Förderbetriebsarten zyklisch vertauscht werden.

Ein Wechsel der Druckbetriebsart auf Saugbetriebsart in der jeweiligen Förderleitung 1,1a erfolgt durch Ansprechen des Kontaktmanometers 3, welches 0-Druck anzeigt und damit kenntlich macht, daß die Leitung voll ist und das Fördergut steht. Es wird dann z. B. von einer Saugförderung auf eine Druckförderung umgeschaltet.

In der anderen Leitung erfolgt das Umgekehrte.

In Figur 5 ist im übrigen dargestellt, daß auf der Saugseite ein für beide Leitungen 1,1a gemeinsames Saugfördergerät 21 angeordnet ist, an welchem ein Vakuumerzeuger 24 angeschlossen ist. Unterhalb des Saugfördergerätes 21 ist in der anhand der Figur 1 beschriebenen Weise eine Zellenradschleuse 22 angeordnet, welche in ein Silo 23 fördert.

Die Vereinigung der beiden Förderleitungen 1,1a stromaufwärts vor dem Saugfördergerät 21 bei Pos. 49 ist notwendig, um in Saugfördergerät 21 stets ein Vakuum aufrecht zu erhalten.

Die Zellenradschleuse 22 dient nur dazu, für den Fall, daß beim Vakuumbetrieb bereits schon Produkt in das Saugfördergerät 21 gefördert wird, dieses Produkt wieder in das Silo 23 abzugeben.

Der Haupteintrag des Fördergutes erfolgt aber über die Abzweigleitungen 31 im Druckbetrieb, wobei entsprechend Rohrweichen 28 vorgesehen sind.

Im gezeigten Ausführungsbeispiel ist die obere Rohrweiche auf Durchfluß geschaltet, während die untere Rohrweiche 28 auf Abzweig geschaltet ist. Damit arbeitet die obere Förderleitung 1 im Saugbetrieb und die untere Förderleitung 1a im Druckbetrieb.

Mit dem zyklischen Umschalten der beiden Rohrweichen 28 wird somit von Saugbetrieb auf Druckbetrieb jeweils umgeschaltet.

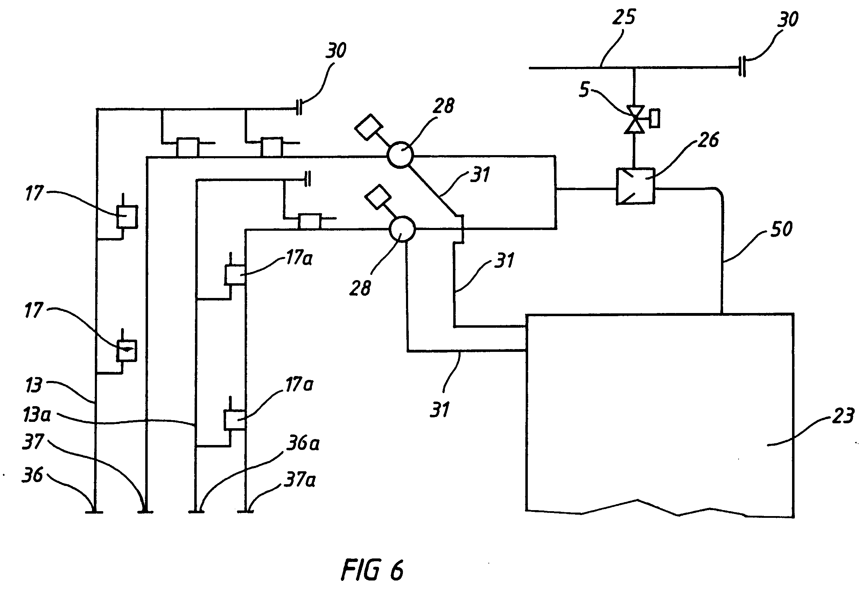

In Figur 6 ist dargestellt, daß auch mehrere parallele Förderleitungen gemäß Figur 5 mit entsprechenden Bypasseinrichtungen versehen werden können, wie dies anhand der Figur 1 erläutert wurde.

Ansonsten gelten die gleichen Erläuterungen wie zu Figur 5.

Die Figur 6 unterscheidet sich also von Figur 5 nur dadurch, daß auf der Druckseite entsprechende Bypasseinrichtungen vorhanden sind, so daß die gesamte Anordnung auch zur Pulverförderung geeignet ist.

Ferner ist in Figur 6 dargestellt, daß das Saugfördergerät 21 ersetzt werden kann durch einen Injektor 26, der über ein Magnetventil 5 und eine Netzleitung 25 mit Überdruck gespeist wird.

Auf diese Weise erfolgt über die Leitungen 31 der Eintrag des Produktes über die abwechselnd geschalteten Rohrweichen 28 in das Silo 23.

Die am Injektor 26 stromabwärts angeschlossene Leitung 50 dient nur zum Eintrag von noch vorhandenem Pulvermaterial und der Treibluft in das Silo.

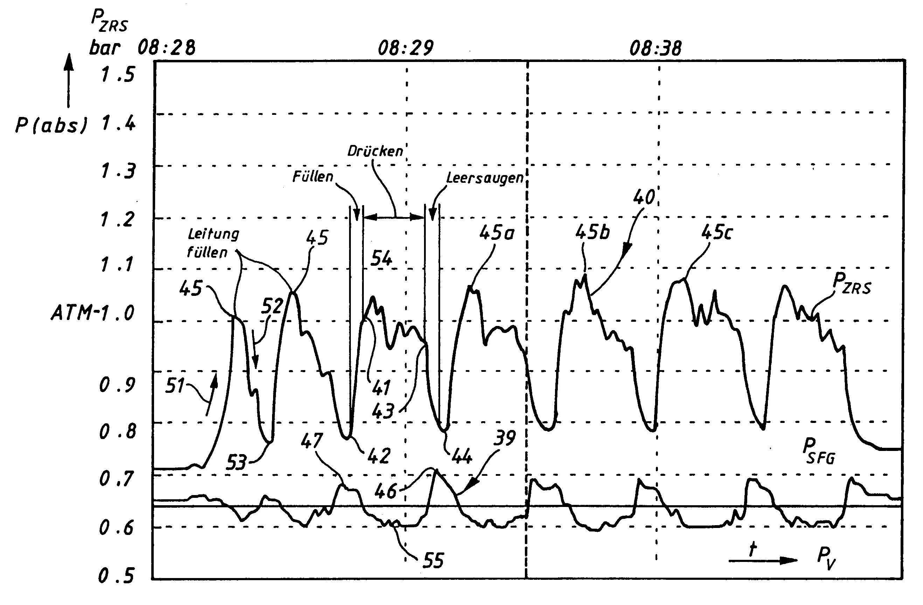

In Figur 7 ist in einem Druck-Zeitdiagramm auf der Ordinate der Absolutdruck aufgetragen und auf der Abzisse die Förderzeit.

In dem oberen Teil des Diagramms ist die Druckkennlinie 40 am Einlaufverschlußventil 20 dargestellt, während korrespondierend hierzu in der unteren Darstellung die Druckkennlinie 39 am Saugfördergerät 21 dargestellt ist.

Bei Absolutdruck 1.0 ist Atmosphärendruck erreicht.

Man erkennt, daß bei der Zeit 0 zunächst die Rohrleitung evakuiert wurde und durch Öffnen des Einlaufventiles 20 durch Unterdruck die Rohrleitung im Dichtstrom teilweise befüllt wurde. Bei Pfeilrichtung 51 wird der Unterdruck verbraucht, um den Massenstrom zu bewegen, bis der Massenstrom in der Spitze 45 zum Stillstand kommt. Jetzt wird auf Druckförderbetrieb umgeschaltet, weil das Kontaktmanometer 3 das Einlaufverschlußventil 20 schließt.

Da über die Netzleitung 4 weiterhin Druckluft in die Förderleitung gespeist wird, baut sich jetzt zum Weiterschieben des Materials ein Überdruck auf, was durch die Spitze 45 gekennzeichnet wird.

Die Druckluft schiebt den sich gebildeten Pfropfen in der Förderleitung weiter, der jetzt zerfällt und bei Pfeilrichtung 52 beginnt der Vakuumerzeuger wieder ein Unterdruck in der Förderleitung von der Abgabeseite her zu erzeugen, wodurch das Fördergut noch nicht in Bewegung gesetzt wird.

Bei maximalem Unterdruck in Pos. 53 öffnet das Kontaktmanometer 3 das Einlaufverschlußventil 20 und eine zweite Teilbefüllung beginnt in der vorher beschriebenen Weise, bis die zweite Druckspitze 45 erreicht wird.

Nach mehreren Takten (Spitzen 45) ist die gesamte Leitung befüllt und der Druckvorgang dauert jetzt wesentlich länger, wie dies bei Pos. 54 gekennzeichnet ist.

Es beginnt nun bei Pos. 54 der erfindungsgemäße Saug-Druckförderbetrieb, wobei erkennbar ist, daß zwischen den Pos. 42 und 41 gefüllt wird, bei Pos. 54 wird im Druckbetrieb gefördert und zwischen Pos. 43 und 44 wird das Vakuum wieder aufgebaut.

Im unteren Diagramm ist die Druckkennlinie am Saugfördergerät 21 gezeichnet.
Durch die Spitzen 46,47 ist gekennzeichnet, daß durch das Leersaugen der Leitung Luft gefördert wird und daß deshalb der Betriebspunkt auf der Kennlinie vom Vakuumerzeuger des Saugfördergerätes ein niedrigeres Delta P aufweist. Bei Pos. 55 saugt der Saugförderer nur die geringere Luft von der Druckeinspeisung und erhält damit wieder sein maximales Delta P.

Durch die gleichmäßige Aufeinanderfolge der Spitzen 45a, 45b und 45c ist dargestellt, daß nun ein quasi kontinuierlicher, nämlich rythmischer Saug-Druckbetrieb in der Förderleitung stattfindet, wodurch das Gut quasi kontinuierlich gefördert wird.

Damit ist klargestellt, daß ein größerer Teil der Förderentfernung durch den Druckbetrieb durchgeführt wird, während ein kleinerer Teil der Förderlänge des Fördergutes durch den Saugbetrieb verwirklicht wird.

Wenn man auf die Aufrechterhaltung des Saugbetriebes z. B. durch Öffnen des Verschlußorganes des Saugfördergerätes 21 verzichtet, dann wird die Spitze 45 jeweils wesentlich höher, und zwar um den Wert des Unterdruckes, der nun entfällt. Auf diese Weise ist es möglich, mit einem Druck von lediglich 6 bar auch größere Förderlängen zu überwinden, die aufgrund des Atmosphärendruckes im Unterdruckbereich nicht realisierbar sind.

## Patentansprüche

1. Verfahren zur pneumatischen Förderung von Schüttgut, wobei dieses in einer Rohrleitung (1) von einem Aufgabeort mittels einer Gasströmung zu einem Empfangsort transportiert wird, wobei das Schüttgut (19) im Dichtstrom mit definierter Geschwindigkeit durch Erzeugen eines Teilvakuums in der Rohrleitung (1) diese teilbefüllt und nach Verschließen der Eintrittsöffnung der Rohrleitung (1) mittels eines Einlaufverschlußventils (20) diese durch Überdruck ganz- oder teilentleert, und daß durch ein dauerndes Wiederholen dieses Vorgangs ein quasi kontinuierlicher Massenstrom vom Aufgabeort zum Empfangsort gewährleistet wird, **dadurch gekennzeichnet**, daß von dem vorhandenen Unterdruckerzeuger mehr Luftmenge abgesaugt wird, als von dem vorhandenen Überdruckerzeuger eingespeist wird.

2. Verfahren nach Anspruch 1, **dadurch gekennzeichnet**, daß eine Overflow-Einrichtung vorhanden ist, die als Bypass-Leitung (13) ausgebildet ist, wobei die in der Bypass-Leitung (13) geförderte Luft über Abzweigeleitungen (14, 15, 17) verschiedenen Überströmventilen (17a, 17b, 17c) zugeführt wird, so daß bedarfsweise ein zusätzlicher Luftstrom in die Förderleitung (1) bläst, um einen sich dort bildenden Propfen aufzulösen.

3. Verfahren nach Anspruch 1 oder 2, **dadurch gekennzeichnet**, daß zwei Förderbetriebsarten vorgesehen sind, einmal zur Förderung von granulatförmigen Stoffen mit gleichmäßiger Kornfraktion, sowie pulverförmigen Stoffen mit unterschiedlicher Kornfraktion.

4. Vorrichtung zur pneumatischen Förderung von Schüttgut mit einer Rohrleitung (1) von einem Aufgabeort mittels einer Gasströmung zu einem Empfangsort zum Transport des Schüttguts, einem Unterdruckerzeuger (21) am Empfangsort, einem Überdruckerzeuger am Aufgabeort und einem Einlaufverschlußventil (20) zum Verschließen der Rohrleitung (1), wobei das Schüttgut (19) im Dichtstrom mit definierter Geschwindigkeit durch Erzeugen eines Teilvakuums in der Rohrleitung (1) diese teilbefüllt und nach Verschließen der Eintrittsöffnung der Rohrleitung (1) mittels eines Einlaufverschlußventils (20) diese durch Überdruck ganz- oder teilentleert wird, **dadurch gekennzeichnet**, daß der Unterdruckerzeuger und der überdruckerzeuger so dimensioniert sind, daß der Unterdruckerzeuger mehr Luftmenge absaugen kann, als von dem vorhandenen Überdruckerzeuger eingespeist werden kann.

5. Vorrichtung nach Anspruch 4, **dadurch gekennzeichnet**, daß der Überdruckerzeuger am druckseitigen Ende über ein Magnetventil (5), einen Druckminderer (6) und einen Lavalkugelhahn (7) den erforderlichen Druck auf der Druckseite der Förderleitung (1) erzeugt.

6. Vorrichtung nach Anspruch 4 oder 5, **dadurch gekennzeichnet**, daß zum Freiblasen der Rohrleitung (1) bei Förderende eine Bypassleitung (8) vorgesehen ist, die den Lavalkugelhahn (7) umgeht.

7. Vorrichtung nach einem der Ansprüche 4 - 6, **dadurch gekennzeichnet**, daß auf der Entnahmeseite der Förderleitung (1) als Unterdruckerzeuger ein Saugfördergefät (21) vorgesehen ist.

8. Vorrichtung nach Anspruch 7, **dadurch gekennzeichnet**, daß das Saugfördergerät (21) aus einem Vakuumerzeuger (24) besteht.

9. Vorrichtung nach Anspruch 7, **dadurch gekennzeichnet**, daß das Saugfördergerät (21) durch einen Injektor (26) gebildet ist, der bevorzugt als Ringspalt-Injektor ausgebildet ist.

10. Vorrichtung nach Anspruch 8 oder 9, **dadurch gekennzeichnet**, daß am Saugfördergerät (21) eine Saugleitung (34) ansetzt, welche über Abzweigleitungen (35) in Reinluftventile (32) mündet, welche mit jeweiligen Filtern des Saugfördergeräts (21) verbunden sind, wobei die Saugleitung (34) am Vakuumerzeuger (24) angeschlossen ist, und die Leitung (34) über ein Falschluftventil (33) entlüftet werden kann.

11. Vorrichtung nach einem der Ansprüche 5 - 10, **dadurch gekennzeichnet**, daß mehrere zueinander parallel angeordnete Förderleitungen (1) vorgesehen sind.

12. Vorrichtung nach Anspruch 11, **dadurch gekennzeichnet**, daß bei der Verwendung von zwei Förderleitungen (1) ein Doppelkolbenprinzip verwirklicht wird, wobei in der einen Förderleitung (1) ein Unterdruck und in der anderen Förderleitung (1a) ein Überdruck und umgekehrt angelegt werden kann und die beiden Förderbetriebsarten zyklisch vertauscht werden können.

## Claims

1. Method for pneumatically conveying bulk material, said material being transported in a pipeline (1) from a delivery point by means of a gas flow to a reception point, wherein the bulk material (19) partially fills the pipeline in a dense flow with a defined speed by generation of a partial vacuum in the pipeline (1) and after closure of the inlet opening of the pipeline (1) by an inlet closure valve (20), the pipeline is totally or partially emptied by means of excess pressure, and wherein by means of permanent repetition of this procedure a virtually continuous mass flow is ensured from the delivery point to the reception point, characterised in that more air can be sucked off by the vacuum generator present than is fed in by the excess pressure generator present.

2. Method according to claim 1, characterised in that an overflow device is present, which is in the form of a by-pass line (13), the air conveyed in the by-pass line (13) being passed via branch lines (14,15,17) to various overflow valves (17a,17b,17c), so that if necessary an additional air flow blows into the conveyor pipe (1), in order to dissolve a blockage forming there.

3. Method according to claim 1 or 2, characterised in that two types of conveyor operation are provided, one for the conveyance of granulate materials with a uniform granular fraction, and for pulverulent materials with a different granular fraction.

4. Device for pneumatic conveyance of bulk material with a pipeline (1) from a delivery point by means of a gas flow to a reception point, for transport of the bulk material, with a vacuum generator (21) at the reception point, an excess pressure generator at the delivery point and an inlet closure valve (20) for closing the pipeline (1), wherein the bulk material (19) partially fills the pipeline (1) in a dense flow with a defined speed by generation of a partial vacuum in said pipeline (1), and after closure of the inlet opening of the pipeline (1), by means of an inlet closure valve (20) the pipeline is totally or partially emptied by excess pressure, characterised in that the vacuum generator and the excess pressure generator are so dimensioned that the vacuum generator can extract more air than can be fed in by the excess pressure generator present.

5. Device according to claim 4, characterised in that the excess pressure generator at the pressure-side end, via a solenoid valve (5), a pressure reducer (6) and a Laval ball valve (7), generates the necessary pressure on the pressure side of the conveyor line (1).

6. Device according to claim 4 or 5, characterised in that in order to blow out the pipeline (1) a by-pass line (8) is provided at the conveyor end, which circumvents the Laval ball valve (7).

7. Device according to one of claims 4 to 6, characterised in that a suction conveyor appliance (21) is provided at the removal side of the conveyor line (1) as a vacuum generator.

8. Device according to claim 7, characterized in that the suction conveyor appliance (21) consists of a vacuum generator (24).

9. Device according to claim 7, characterized in that the suction conveyor appliance (21) is formed by an injector (26) which is preferably in the form of an annular-gap injector.

10. Device according to claim 8 or 9, characterised in that there is connected to the suction conveyor appliance (21) a suction line (34), which opens via branch lines (35) into fresh air valves (32), which are connected to the respective filters of the suction conveyor appliance (21), the suction line (34) being connected to the vacuum generator (24), and the line (34) can be evacuated via a secondary-air valve (33).

11. Device according to one of claims 5 to 10, characterised in that a plurality of conveyor lines (1) are provided, disposed parallel to one another.

12. Device according to claim 11, characterised in that when two conveyor lines (1) are used, a double-piston principle is realised, and a vacuum can be applied in one conveyor line (1) and an excess pressure can be applied in the other conveyor line (1a) and vice versa, and the two types of conveyor operation can be cyclically interchanged.

## Revendications

1. Procédé pour l'acheminement pneumatique de matériau en vrac, selon lequel ce matériau est acheminé dans une canalisation (1) entre un lieu de chargement et un lieu de réception, à l'aide d'un courant de gaz, étant précisé que le matériau en vrac (19) remplit partiellement la canalisation (1) en un courant dense à vitesse définie, grâce à la production d'un vide partiel dans ladite canalisation (1), et après l'obturation de l'ouverture d'admission de celle-ci, le matériau est évacué entièrement ou partiellement de la canalisation grâce à une surpression, à l'aide d'une soupape de fermeture d'entrée (20), et selon lequel un courant de masse quasiment continu est garanti entre le lieu de chargement et le lieu de réception grâce à la répétition permanente de cette opération, **caractérisé** en ce que le générateur de dépression prévu aspire une quantité d'air qui est supérieure à la quantité d'air amenée par le générateur de surpression.

2. Procédé selon la revendication 1, **caractérisé** en ce qu'il est prévu un dispositif de trop-plein qui est conçu comme une conduite de dérivation (13), l'air acheminé dans la conduite de dérivation (13) étant amené par des branchements (14, 15, 16) jusqu'à différentes soupapes de décharge (17a, 17b, 17c), de sorte qu'au besoin, un courant d'air supplémentaire souffle dans la canalisation d'acheminement (1) pour désagréger un bouchon formé dans celle-ci.

3. Procédé selon la revendication 1 ou 2, **caractérisé** en ce qu'il est prévu deux modes d'acheminement, d'une part pour l'acheminement de produits en forme de granulés présentant une grosseur de grain régulière, et d'autre part pour les produits pulvérulents présentant des grosseurs de grains différentes.

4. Dispositif pour l'acheminement pneumatique de matériau en vrac, comportant une canalisation (1) qui amène le matériau, à l'aide d'un courant de gaz, d'un lieu de chargement à un lieu de réception en vue de son transport, un générateur de dépression (21) sur le lieu de réception, un générateur de surpression sur le lieu de chargement, et une soupape de fermeture d'entrée (20) pour fermer la canalisation, étant précisé que le matériau en vrac (19) remplit partiellement la canalisation (1) en un courant dense à vitesse définie, grâce à la production d'un vide partiel dans ladite canalisation (1), et après l'obturation de l'ouverture d'admission de celle-ci, le matériau est évacué entièrement ou partiellement de la canalisation grâce à une surpression, à l'aide d'une soupape de fermeture d'entrée (20), **caractérisé** en ce que le générateur de dépression et le générateur de surpression sont dimensionnés de telle sorte que le générateur de dépression puisse aspirer plus d'air que le générateur de surpression prévu ne peut en amener.

5. Dispositif selon la revendication 4, **caractérisé** en ce que, à l'extrémité située côté pression, le générateur de surpression génère la pression nécessaire, côté pression de la canalisation (1), grâce à une électrovanne (5), à une soupape de réduction de pression (6) et à un robinet à bille de Laval (7).

6. Dispositif selon la revendication 4 ou 5, **caractérisé** en ce qu'il est prévu, pour dégager la canalisation (1) à la fin de l'acheminement, une conduite de dérivation (8) qui contourne le robinet à bille de Laval (7).

7. Dispositif selon l'une des revendications 4 à 6, **caractérisé** en ce qu'il est prévu comme générateur de dépression, sur le côté sortie de la canalisation d'acheminement (1), un appareil d'acheminement par aspiration (21).

8. Dispositif selon la revendication 7, **caractérisé** en ce que l'appareil d'acheminement par aspiration (21) se compose d'un générateur de vide (24).

9. Dispositif selon la revendication 7, **caractérisé** en ce que l'appareil d'acheminement par aspiration (21) est formé par un injecteur (26) qui est conçu de préférence comme un injecteur à fente annulaire.

10. Dispositif selon la revendication 8 ou 9, **caractérisé** en ce qu'il est prévu, au niveau de l'appareil d'acheminement par aspiration (21), une conduite d'aspiration (34) qui débouche par l'intermédiaire de branchements (35) dans des soupapes d'air pur (32) reliées à des filtres correspondants de l'appareil d'acheminement par aspiration (21), la conduite d'aspiration (34) étant raccordée au générateur de vide (24) et pouvant être désaérée grâce à une soupape d'air parasite (33).

11. Dispositif selon l'une des revendications 5 à 10, **caractérisé** en ce qu'il est prévu plusieurs conduites d'acheminement parallèles (1).

12. Dispositif selon la revendication 11, **caractérisé** en ce que dans le cas de l'utilisation de deux conduites d'acheminement (1), un principe de double piston est réalisé, une dépression pouvant être appliquée dans une conduite d'acheminement (1) tandis qu'une surpression peut être appliquée dans l'autre conduite d'acheminement (1a) et inversement, et les deux modes d'acheminement pouvant être intervertis de manière cyclique.
